# EUROPEAN PATENT SPECIFICATION

(11) **EP 2 644 017 B1**
(45) Date of publication and mention of the grant of the patent: **27.12.2017**
(21) Application number: 13160063.7
(22) Date of filing: 19.03.2013
(51) Int. Cl.: A01D 33/04, B07B 1/14, A01D 17/06

(54) **Device for separating soil, clod and/or stones from root vegetables or bulbs**
Vorrichtung zum Trennen von Boden, Klumpen und/oder Steinen aus Wurzelgemüse oder Zwiebeln
Dispositif de séparation de sol, mottes et pierres de légumes ou bulbes à racine

(30) Priority: 27.03.2012 GB 201205338
(43) Date of publication of application: 02.10.2013
(73) Proprietor: Weston, David Booth, Boston, Lincolnshire PE20 1LY (GB)
(72) Inventor: Weston, David Booth, Boston, Lincolnshire PE20 1LY (GB)
(74) Representative: Orr, Robert

(56) References cited:
- EP-A1- 0 704 253
- GB-A- 2 292 874
- NL-C1- 1 004 726
- NL-C2- 1 016 185
- US-B1- 7 117 996

## Description

The present invention relates to a device for separating soil, clod and/or stones from root vegetables or bulbs. In particular, but not exclusively, the present invention relates to a device for separating soil, clod and/or stones from root vegetables or bulbs, the device comprising resiliently deformable rotatable members.

A variety of different types of devices for separating soil, clod and/or stones from root vegetables or bulbs are known in the agricultural and horticultural industries, for use in harvesting a crop of root vegetables or bulbs, such as potatoes, carrots and onions. The devices are generally referred to in the industry as separators, and are provided as part of a machine known as a harvester, which is used to dig up and separate the crop of root vegetables or bulbs. Soil containing the crop as well as 'clods' and stones is dug-up by the harvester, and the soil, clods and stones are then separated from the crop. The separators can also be incorporated into static machines provided in a storage warehouse or the like. Static machines are typically provided where it is desired to perform a further separation, say where the crop has been harvested under particularly wet conditions, resulting in significant volumes of soil, clods and/or stones remaining, mixed in with the harvested crop.

The known separators for use in a harvester, particularly a potato harvester, comprise a device consisting of a series of pairs of counter-rotating rotatable members which are arranged to draw down soil, clods, stones, haulm and weeds whilst the crop (potatoes), which has a relatively smooth surface, passes over the rollers. Each pair of rotatable members consists of an upstream, resiliently deformable rotatable member, which is positioned in close proximity to a downstream counter-rotating rotatable member. The attached drawing Fig. A is a side view of the counter-rotating rollers of one such known device for separating soil, clod, stones, haulm and weeds from potatoes. The device includes an upstream resiliently deformable rotatable member 1, and a downstream counter-rotating rotatable member 2. The upstream rotatable member 1 rotates in a clockwise direction, as indicated by the arrow 'A' in the drawing. The rotatable member 1 comprises an inner hub portion 4 and an outer shell or casing 7, with spoke sections 5 extending between the hub portion 4 and the shell 7, and a number of internal cavities 6. A number of projections in the form of axially extending ribs 3 are provided on the rotatable member 1, and are upstanding from an external surface 8 of the rotatable member. The downstream rotatable member 2 rotates in an anticlockwise or counterclockwise direction, as indicated by the arrow 'B' in the drawing. The downstream rotatable member 2 comprises an inner core 9 which is typically of a metal such as a steel, and an outer layer 10 which is typically of an elastomeric material. A scraper element 11 is provided for the rotatable member 2. A minimum spacing 'C' is defined between the surfaces of the counter-rotating rollers 1 and 2, which is determined by the upstanding height of the axially extending ribs 3 above or out of the surface 8 of the rotatable member 1.

In practice, in a harvesting procedure employing devices of the type shown in Fig. A, small crop items such as small potatoes are lost with separated material (soil, clods and stones), and so fall back down on to the field. This not only reduces crop yield, but the potatoes which fall back down on to the field remain in the soil and can regrow as weeds in subsequent crops. Plant diseases may also be maintained in the soil during subsequent years in which regrowth of potatoes takes place, negating the benefits of crop rotation.

Although the size of small potatoes allowed to pass down through the known separator is adjustable, by virtue of the spacing between the separating rotatable members, this is always a compromise between loss of crop and the amount of soil, clod and stones that can be separated. The ribs extending out from the surface of known resiliently deformable separating rotatable members do not allow a sufficiently small gap setting between counter-rotating rotatable members in order to prevent the unwanted loss of small potatoes, particularly in dry soil harvesting conditions. Conversely, any build-up of soil adhering to the surface of the separating rotatable members reduces the gap between the rotatable members, and therefore the ability of the separator to function effectively in wet soil harvesting conditions.

The loss of small potatoes in dry soil conditions, and the build up of soil on the surface of separating rotatable members in wet soil conditions, can be reduced to some extent by rotating the upstream rotatable members of each pair of counter-rotating rollers at a higher speed than is necessary to convey the crop or to provide separation. However, this results in a significantly increased risk of crop damage due to bruising.

UK Patent Publication No. GB-2292874 discloses a device for separating materials comprising two spaced, substantially parallel rotatable members, in the form of rollers. The rollers are arranged to rotate in opposition directions, to separate haulms from potatoes. One of the rollers is substantially square in cross-section, having flat sides which extend in a length direction of the roller. Scrapers are provided for removing material adhered to the rollers.

It is amongst the objects of the present invention to obviate or mitigate at least one of the foregoing disadvantages.

According to a first aspect of the present invention, there is provided a device for separating soil, clod and/or stones from root vegetables or bulbs, the device comprising:
at least one pair of rotatable members which are arranged so that soil, stones and/or clods are drawn down between the rotatable members whilst root vegetables or bulbs pass thereover, and in which:
   - the rotatable members in said pair are arranged to rotate in opposite directions;
   - at least one of the rotatable members in said pair is resiliently deformable;
   - at least one of the rotatable members in said pair is generally circular in cross-section, and has at least one flat formed on an outer surface thereof, the at least one flat extending in a helical path around a circumference of the rotatable member; and
   - each rotatable member in said pair has a surface which is free from projections;
   and in which the device comprises cleaning elements, one for each rotatable member in said pair, for removing material adhered to a surface of the rotatable member.

The device of the present invention offers numerous advantages over prior devices having counter-rotating rotatable members. In particular, providing rotatable members which have surfaces that are free from projections enables a gap between the rotatable members to be reduced, compared to prior devices. This reduces the likelihood of small root vegetables or bulbs being drawn down with the soil, stones and/or clods and discharged back on to the ground. Also, the smaller gap means that it is no longer necessary to rotate an upstream rotatable member in said pair at the relatively high speeds that are found in prior devices, in order to reduce the likelihood of draw-down of such small root vegetables or bulbs. This reduces a risk of damage to the crop, and also reduces power consumption. Furthermore, another reason for rotating the upstream rotatable members of prior devices at high speeds was so that the force was sufficient to 'fling' material adhered to the rotatable member from its external surface. The provision of rotatable members which are free from projections enables the use of the associated cleaning elements, which remove material adhered to the rotatable members as they rotate. This means that the rotatable members can be rotated at lower speeds than in prior devices without any detriment in terms of rotatable member cleanliness, and maintenance of the gap between the members (and thus performance of the device).

Each rotatable member in said pair has a surface which is free from projections, which it will be understood can be considered to be an operating surface of the rotatable member which acts, in use, to draw down the soil, stones and/or clods.

Each rotatable member in said pair may have a surface which is free from projections in that no part of the rotatable member extends or protrudes beyond the surface of the member, which may be a main outer surface of the rotatable member which acts, in use, to draw down soil, stones and/or clods. For example, prior separators of the type shown in Fig. A and described above have rotatable members including projections in the form of axially extending ribs, which are upstanding from an external surface of the rotatable member. The rotatable members of the invention are free from such projections, providing the advantages discussed above.

Each rotatable member in said pair may describe a maximum outer circumference, and may be free from projections in that no part of the rotatable member extends beyond said circumference. Each rotatable member may have a main outer surface, at least part of said surface residing on or describing a circle in cross-section, and the maximum outer circumference described by the rotatable member may be defined by said part of the surface. A majority of the main outer surface of each rotatable member may reside on or describe the maximum outer circumference.

The surfaces of the rotatable members may be smooth, or relatively or substantially smooth.

Each rotatable member in said pair may have or may describe a uniform outer diameter, and so an outer diameter which does not change around the circumference of the rotatable member. Each rotatable member in said pair may have a circular profile/may be circular in cross-section, and may be generally cylindrical.

The rotatable members may be rollers. At least part of the rotatable members, optionally the external surfaces, may be of a material having a relatively low coefficient of friction. Suitable materials include elastomeric materials such as polyurethane, synthetic and/or natural rubbers.

The provision of rotatable members having such shapes and external surfaces which are free from projections (and optionally external surfaces of a material having a low coefficient of friction) may reduce a likelihood of damage to the root vegetables or bulbs during use of the device. This is because it is less likely that the root vegetable or bulb will be gripped between the rotatable members and drawn down. Also, the surface is free from projections which might otherwise strike the root vegetable or bulb during rotation of the roller. In contrast, soil, clod and/or stones will be gripped by the rotatable members and drawn down, and the gripping effect on clods and stones will be enhanced as the clods/stones will tend to deform said resiliently deformable rotatable member such that they are securely gripped.

At least one of the rotatable members is generally circular in cross-section, having at least one flat formed on an outer surface thereof. The at least one flat may be a chord of the circle defined by the rotatable member. The provision of at least one flat may advantageously improve the gripping and draw-down effect on soil, stones and/or clods, particularly in wet conditions. There may be a plurality of flats, which may be equidistantly spaced around a circumference of the rotatable member. The at least one flat extends in a helical path around the circumference of the rotatable member as the flat progresses along the axial length of the rotatable member. This may restrict exposure of the cleaning element (associated with the rotatable member) to the at least one flat to only a portion of its length at any given time. In other words, for any given rotational position of the rotatable member, only a part (or parts) of a length of the cleaning element will be located adjacent to the flat. This may be beneficial in terms of restricting a tendency for a hammering effect to be felt by the cleaning element, when it is adjacent to the flat.

Reference is made to the rotatable members in said pair rotating in opposite directions. It will be understood that the members may therefore counter-rotate.

Reference is made herein to a resiliently deformable rotatable member or members. It will be understood that the rotatable members are resiliently deformable in that the rotatable members may be deformable under an applied load, but return to a pre-deformation configuration or position after removal of the applied load. It will be understood that the applied load may be as a result of soil, clod, stones and/or other material being drawn down between the rotatable members and exerting a force thereon.

The rotatable members in said pair may comprise an upstream rotatable member and a downstream rotatable member (relative to a direction of travel/flow of material along the device).

The rotatable members in said pair may each be of the same radius, or may each describe the same outer diameter. The rotatable members in said pair may be of different radii, or may describe different outer diameters. The upstream rotatable member may have a larger radius than that of the downstream rotatable member, or may describe an outer diameter which is larger than that described by the downstream rotatable member.

The rotatable members in said pair may be arranged so that there is a declination in a direction along the device from a location at which material is charged on to the rotatable members. This may encourage the flow of material along the device. The rotatable members in said pair may be arranged so that a line intersecting the surfaces of the rotatable members is declined in said direction along the device. In other words, an upper extent of the upstream rotatable member may be at a vertical height which is above that of the downstream rotatable member.

The device may comprise a first, upstream pair of rotatable members and at least one further pair of rotatable members which are located downstream of the first pair of rotatable members, and which are arranged to receive material passing along the device from the first pair. The upstream rotatable member of the further pair may be arranged relative to the upstream rotatable member of the first pair so there is a declination in a direction along the device from a location at which material is charged on to the rotatable members. This may encourage the flow of material along the device. Said rotatable members may be arranged so that a line intersecting the surfaces of the rotatable members is declined in said direction along the device. In other words, an upper extent of the upstream rotatable member of the first pair may be at a vertical height which is above that of the upstream rotatable member of the at least one further pair. Further such pairs of rotatable members may be provided, and arranged in a similar fashion relative to an adjacent upstream pair of rotatable members.

Both of the rotatable members in said pair may be resiliently deformable. The resiliently deformable members may each be resiliently deformable to the same or a similar degree/extent.

The resiliently deformable rotatable member may be capable of resiliently supporting large deformations, relative to the radius of the rotatable member. This may greatly reduce the likelihood of damage to the rotatable members during use of the device, particularly when clod and/or stones which are oversized relative to a spacing between the rotatable members in said pair is drawn down. The rotatable member may be capable of resiliently supporting a deformation of at least about 15% relative to a radius of the rotatable member to facilitate the passage of soil, clod and/or stones between the rotatable members. The rotatable member may be capable of resiliently supporting a deformation of at least about 20%, optionally at least about 30%, and optionally at least about 40%, relative to a radius of the rotatable member, to facilitate the passage of soil, clod and/or stones between the rotatable members. The rotatable member may be capable of resiliently supporting a deformation of up to about 40%, optionally up to about 50%, and optionally up to about 60%, relative to a radius of the rotatable member, to facilitate the passage of soil, clod and/or stones between the rotatable members.

The resiliently deformable rotatable member may comprise a hub portion, an outer shell or casing and a plurality of spokes extending between the hub portion and the outer shell. A plurality of cavities may be defined between the hub portion and the outer shell. The spokes and/or the cavities may facilitate resilient deformation of the rotatable member. Both of the rotatable members in the pair may take this form. Alternatively, the other rotatable member in said pair may be resiliently deformable to a lesser extent than the other member in the pair. The other rotatable member may have an inner core and an outer surface layer, the outer surface layer of a material having a higher resilience than that of the inner core. Typical materials for the inner core include metals and metal alloys, and for the outer surface layer include elastomeric materials. The outer surface layer may have a thickness of up to around 50% of a radius of the rotatable member.

Reference is made herein to speeds of rotation of the rotatable members. Such references may be to the speed of rotation of the rotatable members about their respective axes.

The cleaning elements may have a cleaning edge or surface which is arranged relative to the respective rotatable member so that it removes material adhered to the surface of the rotatable member by abrasion, as the rotatable member rotates. The cleaning elements may each be arranged with their cleaning edges adjacent to the surface of the respective rotatable member, for cleaning the member during rotation thereof. The cleaning elements may be arranged so that the cleaning edge is in contact with the respective rotatable member. The cleaning elements may be arranged so that there is a gap between the cleaning edge and the surface of the respective rotatable member. The gap may be relatively small, for example around 1 to 3mm. The cleaning elements may be urged towards the surface of the respective rotatable members, and may be biased such as by a spring or sprung arrangement. The cleaning elements may be scraper elements or scrapers, and may be scraper blades. Alternative cleaning elements such as wires or brushes may be employed. Different cleaning elements may be employed for each rotatable member in the pair. More than one cleaning element may be provided for each rotatable member in the pair, and the cleaning elements associated with each rotatable member may be of different types (for example, a scraper element and a brush may be provided).

According to a second aspect of the present invention, there is provided a harvester including a device for separating soil, clod and/or stones from root vegetables or bulbs according to the first aspect of the invention.

According to a third aspect of the present invention, there is provided a static machine for separating soil, clod and/or stones from root vegetables or bulbs, the machine comprising a device for separating soil, clod and/or stones from root vegetables or bulbs according to the first aspect of the invention.

Further features of the harvester of the second aspect, and the static machine of the third aspect, are defined above in relation to the first aspect of the invention.

Embodiments of the present invention will now be described, by way of example only, with reference to the accompanying drawings, in which:
Fig A: is a view of a pair of rotatable members of the prior art devices;
Fig. 1 is a schematic side view of a device for separating soil, clod and/or stones from root vegetables or bulbs which does not fall within the scope of the invention as claimed, but which illustrates a number of features of a device of the present invention;
Fig. 2 is an enlarged view of a pair of rotatable members of the device shown in Fig. 1;

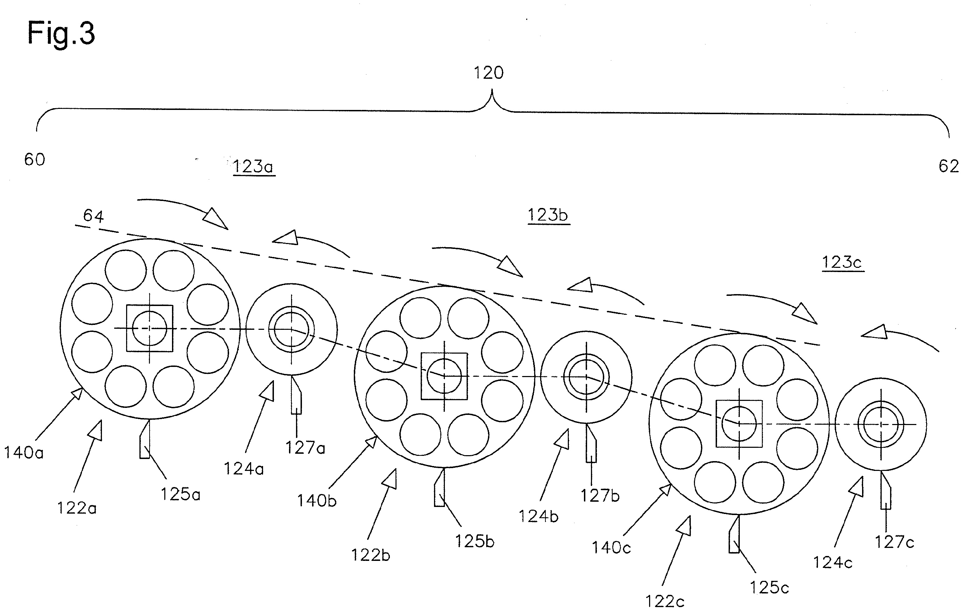

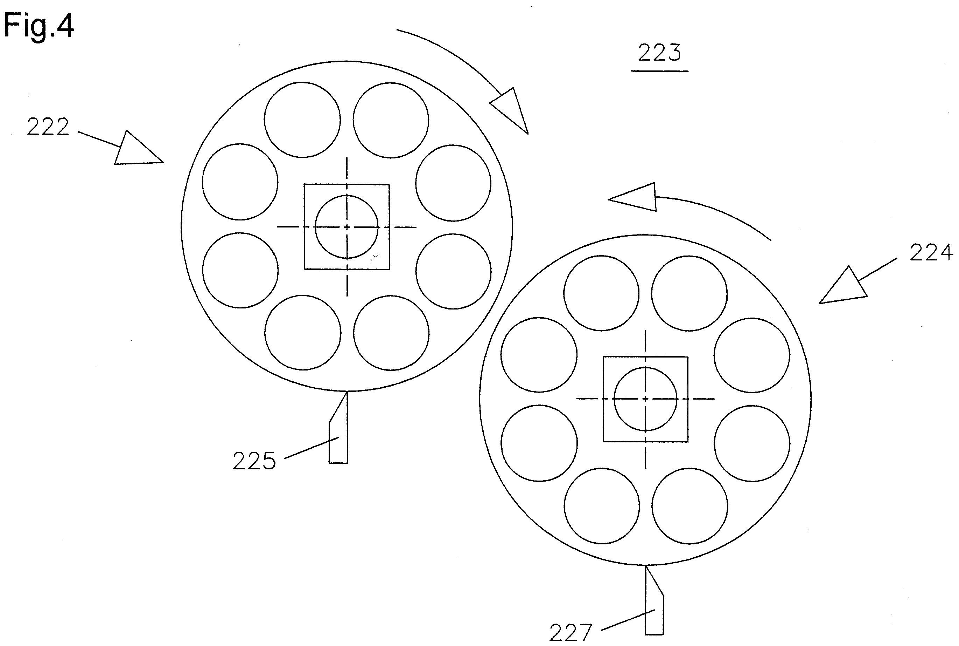

Fig. 3 is a side view of rotatable members of another device for separating soil, clod and/or stones from root vegetables or bulbs which does not fall within the scope of the invention as claimed, but which illustrates a number of optional features of a device of the present invention, the device having a plurality of pairs of rotatable members; Fig. 4 is a side view of a pair of rotatable members for a device for separating soil, clod and/or stones from root vegetables or bulbs, illustrating a number of optional features of a device of the present invention, the device incorporating the rotatable members falling outside the scope of the invention as claimed;
Figs. 5 and 6 are side views of alternative rotatable members for a device for separating soil, clod and/or stones from root vegetables or bulbs in accordance with an embodiment of the present invention;
Figs 7A and 7B are side and front views, respectively, of a rotatable member for a device for separating soil, clod and/or stones from root vegetables or bulbs in accordance with an embodiment of the present invention; and
Figs 8A and 8B are side and front views, respectively, of a rotatable member for a device for separating soil, clod and/or stones from root vegetables or bulbs in accordance with another embodiment of the present invention.

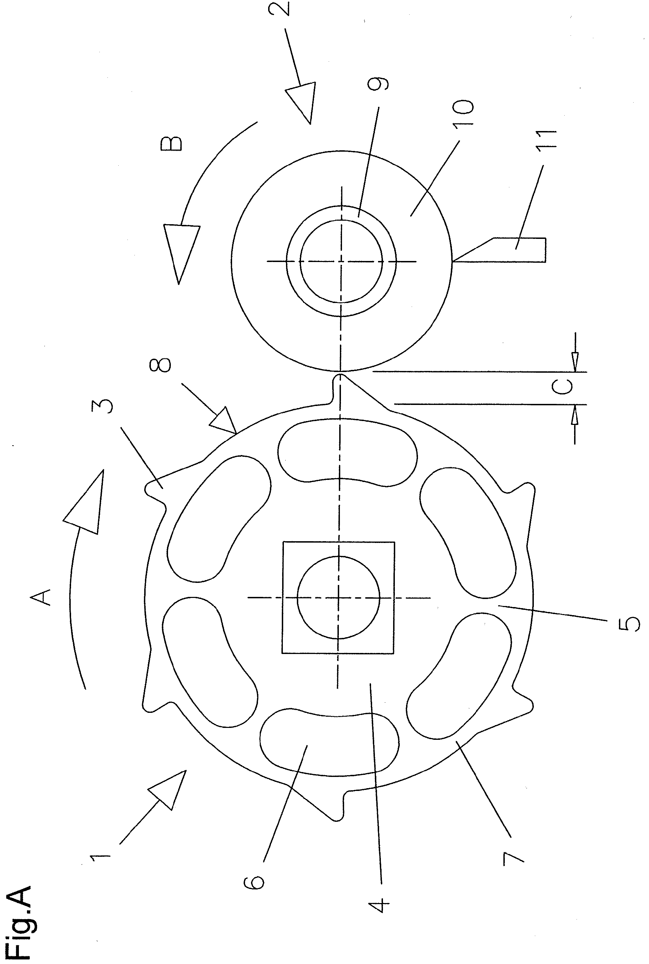

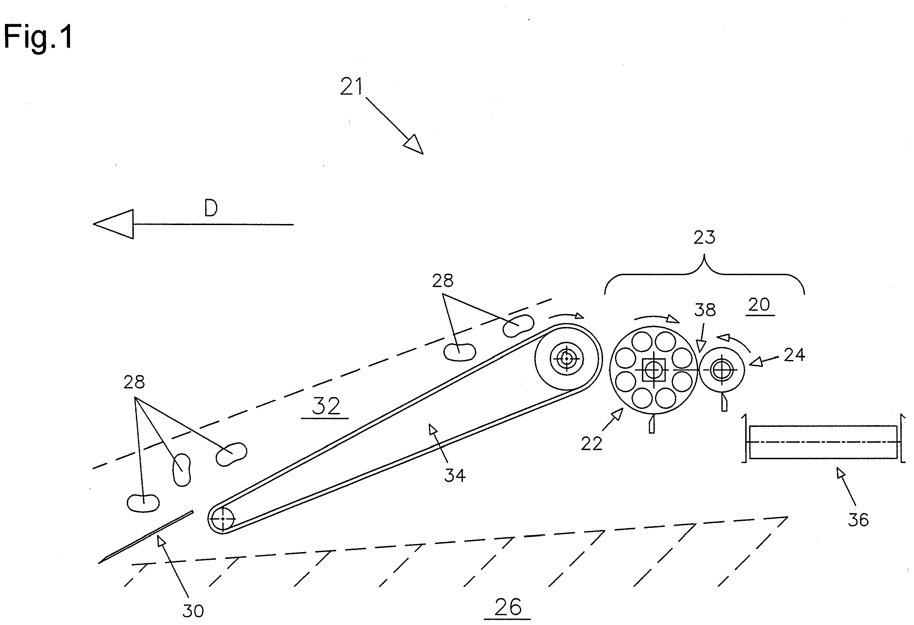

Turning firstly to Fig. 1, there is shown a schematic side view of a device for separating soil, clod and/or stones from root vegetables or bulbs, the device indicated generally by reference numeral 20. The device 20 takes the form of a separator, and is shown incorporated into a harvester, the harvester indicated generally by reference numeral 21. However, the separator 20 can equally be provided as part of a static machine (not shown). Static machines are typically provided in a warehouse or the like where the root vegetables or bulbs are to be stored, and may be utilised when it is desired to perform a further separation following harvesting of the crop. This might be necessary, for example, when the crop has been harvested under particularly wet conditions, resulting in significant volumes of soil, clods and/or stones remaining, mixed in with the harvested crop.

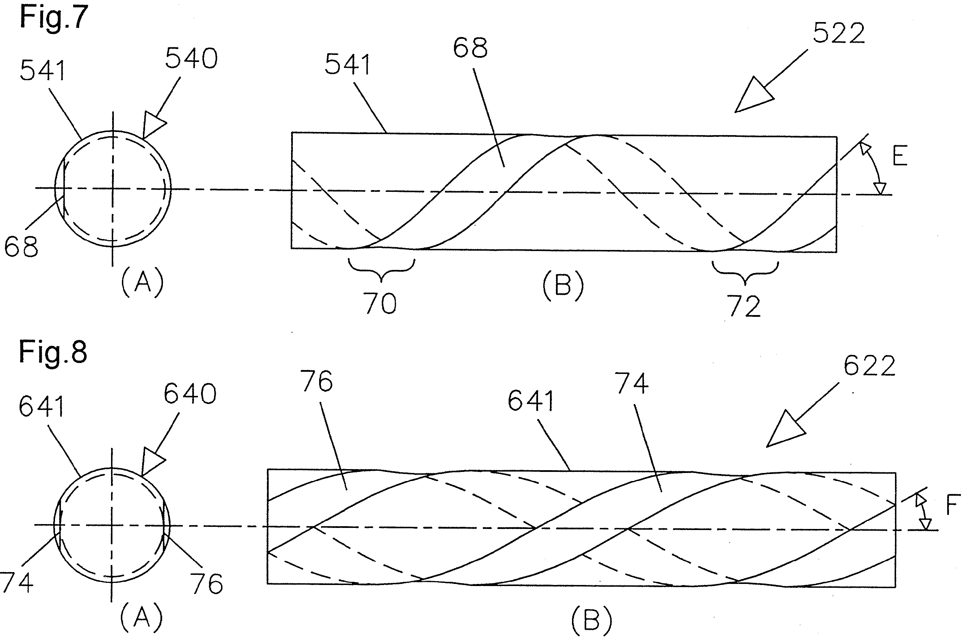

The separator 20 generally comprises a pair 23 of rotatable members comprising a first rotatable member 22 and a second rotatable member 24, which are positioned adjacent to one another. The device 20 shown in Fig. 1 does not fall within the scope of the invention as claimed, but does illustrate a number of features of devices falling within the scope of the invention. Specifically, embodiments of the claimed invention are based on the device 20 of Fig. 1 but, in the claimed invention, at least one of the rotatable members in said pair is generally circular in cross-section, and has at least one flat formed on an outer surface thereof, the at least one flat extending in a helical path around a circumference of the rotatable member. Embodiments of such rotatable members are shown in Figs. 7A/B and 8A/B, and will be discussed below.

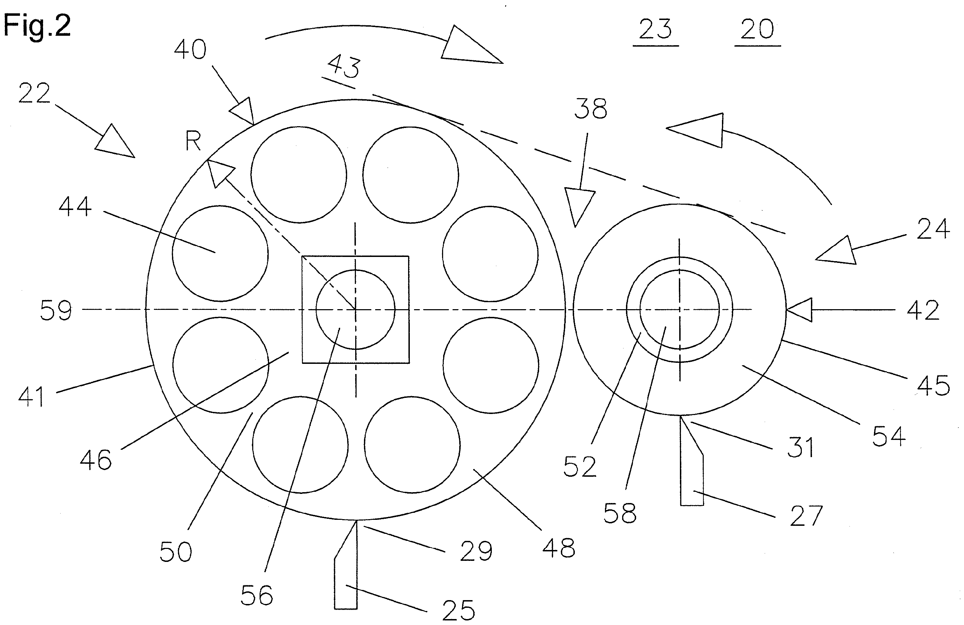

The rotatable members 22 and 24 of Fig. 1 are better shown in the enlarged view of Fig. 2, and each take the form of rollers. The first roller 22 in the pair 23 is located upstream of the second roller 24. At least one of the rollers 22, 24 in said pair 23 is resiliently deformable and, in the illustrated embodiment, both of the rollers 22 and 24 are resiliently deformable. However, the second roller 24 is resiliently deformable to a lesser extent than the roller 22, as will be described in more detail below. The rollers 22 and 24 are arranged to rotate in opposite directions, and so counter-rotate. The rotatable members 22 and 24 have respective surfaces 40 and 42 which are smooth and free from projections, and the separator 20 comprises cleaning elements in the form of scraper blades 25 and 27, one for each roller in the pair. The scraper blades 25 and 27 act to remove soil or clod residue which has become adhered to the surfaces of the rollers 22 and 24, particularly when clods are drawn down and crushed between the rollers.

The separator 20 of the present invention offers numerous advantages over prior devices having counter-rotating rotatable members, such as that shown in the accompanying drawing Fig. A. In particular, providing rotatable members which have surfaces that are free from projections enables a gap between the rotatable members to be reduced, compared to prior devices. This reduces the likelihood of small root vegetables or bulbs being drawn down with the soil, stones and/or clods and discharged back on to the ground. Also, the smaller gap means that it is no longer necessary to rotate an upstream rotatable member in said pair at the relatively high speeds that are found in prior devices, in order to reduce the likelihood of draw-down of such small root vegetables or bulbs. This reduces a risk of damage to the crop, and also reduces power consumption. Furthermore, another reason for rotating the upstream rotatable members of prior devices at high speeds was so that the force was sufficient to 'fling' material adhered to the rotatable member from its external surface. The provision of rotatable members which are free from projections enables the use of the associated cleaning elements, which remove material adhered to the rotatable members as they rotate. This means that the rotatable members can be rotated at lower speeds than in prior devices without any detriment in terms of rotatable member cleanliness, and maintenance of the gap between the members (and thus performance of the device). Having smooth surfaces, all rollers can be kept clean by providing scrapers, enabling relatively slow speeds of rotation to be used without soil building up on the surface of the rollers and blocking the separator.

Each rotatable member 22, 24 in the pair 23 has a surface which is free from projections in that no part of the rotatable member extends or protrudes beyond the respective surface 40, 42 of the roller, which is a main outer surface of the rotatable member which acts, in use, to draw down soil, stones and/or clods. Each rotatable member 22, 24 in the pair 23 describes a respective maximum outer circumference 41, 45 and is free from projections in that no part of the rotatable member extends beyond said circumference.

In use, the harvester 21 incorporating the device 20 is typically towed in the direction of the arrow D across a field 26 containing a crop of root vegetables or bulbs 28. The crop 28 may be any suitable root vegetable or bulb including potatoes, onions and carrots, but the illustrated embodiments are discussed in relation to the harvesting of potatoes. Typically in the case of potatoes, the counter-rotating rollers 22 and 24 will also operate to separate weeds and/or haulm from the potatoes. Such may not be necessary in the case of carrots, onions or other crops, where the tops of the carrots etc. protrude above ground, and the haulm can be removed prior to harvesting.

As the harvester 21 moves across the field 26, a share blade 30 digs up material 32 from the field (typically to a depth of around 15cm) which comprises soil, clod and/or stones as well as the root vegetables or bulbs 28, and transfers the material rearwardly, relative to the direction of travel, on to a web conveyor 34 of a type known in the art. The web conveyor 34 comprises a number of metal bars or rods (not shown) which are oriented perpendicular to a main axis of the conveyor, and acts to both perform an initial sieving operation on the material 32, sieving out loose soil, and also to transfer the material 32 on to the resiliently deformable roller 22. The depth of the material 32 on the web conveyor 34 thus reduces as it is transported along the conveyor, as indicated in Fig. 1, with loose soil falling back down on to the field 26.

The rollers 22 and 24 are better shown in the enlarged view of Fig. 2. The roller 22 carries the material 32 to an interface region 38 between the rollers 22 and 24. The rollers 22 and 24, which are counter-rotated, act to draw down soil, stone and/or clods while the root vegetables or bulbs 28 pass thereover, for discharge on to a lateral conveyor 36 at a downstream location, for subsequent collection. The action of the web conveyor 34 to sieve out loose soil, and of the rollers 22 and 24 to draw down soil, stone and/or clods, causes the level of the field 26 that has been dug up by the share blade 30 to increase towards the rear of the harvester 21, as indicated in the drawing. Potatoes 28, having relatively smooth skin in comparison to surfaces of clod and stones, are not gripped by external surfaces 40 and 42 of the rollers 22 and 24. Consequently, the potatoes simply bounce around or rotate in the interface region 38 between the rollers 22 and 24, and remain there until displaced by further material 32 passing along the device 20.

To facilitate the action of drawing down the soil, clods and stones whilst allowing the potatoes 28 to pass over the rollers 22 and 24, the roller 22 is arranged so that it is capable of resiliently supporting a deformation of more than about 10% relative to a radius R (Fig. 2) of the roller to facilitate the passage of soil, clod and/or stones between the rollers. In preferred embodiments, the roller 22 is arranged so that it is capable of resiliently supporting a deformation of up to about 20% to 30%. In other words, the roller 22 may be capable of resiliently deforming in such a fashion that a radius of the roller is reduced by more than about 10%, optionally up to about 20% or 30%. The roller 22 may be capable of resiliently supporting a deformation of up to about 40%, optionally up to about 50%, or about 60%, relative to the radius R.

In the device of Fig. 1, this is achieved by appropriate shaping of the roller 22, and indeed selection of appropriate materials for forming the rollers. Suitable materials include elastomeric materials such as polyurethane. In the device of Fig. 1, the roller 22 is provided with a number of internal cavities 44, which allow the external surface 40 of the roller to deform inwardly during passage of, for example, a stone. In more detail and referring to the roller 22 shown in Fig. 2, the roller comprises an inner hub portion 46 and an outer shell or casing 48, with spoke sections 50 extending between the hub portion 46 and the shell 48. The spoke sections 50 assist deformation of the roller 22 during passage of a stone between the rollers 22, 24. The cavities 44 are each formed between the inner hub region 46 and the outer shell 48, and bound by adjacent spoke sections 50, and extend axially along the roller 22. In use, the roller 22 can be deformed by application of a load at any point around a circumference of the outer shell 48, deformation occurring by inward deflection of the outer shell 48 itself, and/or by deflection of the spoke sections 50.

As discussed above, the second roller 24 is resiliently deformable, but to a lesser extent than the first roller 22. This is achieved by providing the second roller 24 with an inner core 52 which is typically of a metal, and an outer layer 54 which is typically of an elastomeric material. A small deformation of up to a maximum of around 10% relative to the radius of the roller 24 occurs during drawing down of a stone. The second roller 24 is also of a smaller radius than the first roller 22, which promotes the flow of material (particularly potatoes 28) over the rollers.

As can be seen from Figs. 1 and 2, the first and second rollers 22 and 24 are each generally cylindrical, having a circular profile (or circular shape in cross-section), and an external surface 40, 42 which is free from projections and thus smooth. This provides the numerous advantages discussed above. In addition, the smooth external surfaces 40 and 42 do not tend to 'grip' the potatoes 28 during use and draw them down. This also facilitates the use of the scraper elements 25 and 27, for keeping the rollers clean. Such is not possible in prior devices having rollers with projections such as ribs, for example in the device shown in Fig. A.

The rollers 22 and 24 are arranged so that there is a declination, from the point at which the material 32 is charged on to the roller 22, towards a rear of the harvester 21. This is as a result of the second roller 24 having a smaller radius than the first roller 22, and also due to shafts 56 and 58 of the rollers being positioned in a common horizontal plane 59. A line 43 intersecting the surfaces 40 and 42 of the rollers 22 and 24 is thus declined relative to the horizontal. This arrangement helps to promote the flow of material (particularly the potatoes 28) over the rollers, as discussed above.

The scraper blades 25 and 27 associated with the first and second rollers 22 and 24 have respective edges 29 and 31 which are arranged in contact with the surfaces 40 and 42 of the rollers. In this way, the scraper blades 25 and 27 remove material (soil etc.) adhered to the roller surfaces 40 and 42 as the rollers rotate. The scraper blades 25 and 27 may be biased, by a spring or sprung arrangement, so that their edges 29 and 31 are urged into contact with the roller surfaces 40 and 42. This may facilitate the scraping action and keep the rollers as clean as possible. However, in a variation on the illustrated embodiment, the scraper blades 25 and 27 may be arranged so that there is a gap between the blade edges 29, 31 and the respective roller surfaces 40, 42. The gap may be relatively small.

The harvester 21 shown in Fig. 1 is exemplary, and intended primarily to illustrate the general principles of the separator 20 of the present invention. In practice it is likely that a harvester incorporating a separator constructed according to the principles of the invention would comprise a plurality of pairs 23 of rotatable members. To this end, Fig. 3 is a side view of part of another device for separating soil, clod and/or stones from root vegetables or bulbs, the device indicated generally by reference numeral 120. Like components of the device 120 with the device 20 shown in Figs. 1 and 2 share the same reference numerals, incremented by 100.

As can be seen from Fig. 3, the separator 120 has a plurality of pairs of rollers, the pairs indicated generally by reference numerals 123a, 123b and 123c. The device 120 shown in Fig. 3 does not fall within the scope of the invention as claimed, but does illustrate a number of features of devices falling within the scope of the invention. Specifically, embodiments of the claimed invention are based on the device 120 of Fig. 3 but, in the claimed invention, at least one of the rotatable members in said pair is generally circular in cross-section, and has at least one flat formed on an outer surface thereof, the at least one flat extending in a helical path around a circumference of the rotatable member. Embodiments of such rotatable members are shown in Figs. 7A/B and 8A/B, and will be discussed below.

Rollers 122a and 124a in the first pair 123 a of rollers perform an initial separation of stone, clods and soil from material 32 which is charged on to the separator 120 at an upstream end 60 of the separator. Remaining stone, clods and soil, together with the crop of potatoes 28, pass over the second roller 124a in the first pair 123a of rollers, and is discharged on to the second pair 123b of rollers. The second pair 123b of rollers includes first and second rollers 122b and 124b, which perform a further separating action. The further remaining stone, clods and soil, together with the crop of potatoes 28, then passes over the second roller 124b in the second pair 123b of rollers, and is discharged on to the third pair 123c of rollers. The third pair 123c of rollers includes first and second rollers 122c and 124c which perform a final separating action. The crop of potatoes 28 are discharged from the separator 120 at a downstream end 62, which defines a discharge location, on to a lateral conveyor (not shown). An effective separating action occurs along the length of the separator 120, such that the potatoes 28 that are discharged from the discharge end 62 are substantially free from soil, clods and stones, such having been separated and returned to the ground by the combined action of the rollers in the pairs 123a to 123c.

The rollers in the roller pairs 123a to 123c are arranged so that there is a declination along the length of the separator 120 in the direction of travel of the material 32 carrying the crop. This is achieved by positioning the first rollers 122a to 122c at progressively lower vertical heights, as can clearly be seen from the drawing. A line 64 intersecting surfaces 140a, 140b and 140c of the first rollers 122a to 122c in the pairs is thus declined relative to the horizontal. The first rollers 122a to 122c in the roller pairs 123a to 123c have respective scraper blades 125a to 125c. Similarly, the second rollers 124a to 124c in the roller pairs 123a to 123c have respective scraper blades 127a to 127c. The blades act to remove material adhered to the rollers in the fashion described above.

Turning now to Fig. 4, there is shown a side view of a pair of rotatable members for another device for separating soil, clod and/or stones from root vegetables or bulbs, the pair of rotatable members indicated generally by reference numeral 223. The device incorporating the pair of rotatable members 223 shown in Fig. 4 does not fall within the scope of the invention as claimed. However, the drawing does illustrate a number of features of devices falling within the scope of the invention. The rotatable members 223 may be provided in the separator 20 of Fig. 1 in place of the rotatable member pair 23, or indeed in the separator 120 of Fig. 3 in place of the rotatable member pairs 123a to 123c. In the latter case, each rotatable member pair 123a to 123c would be replaced by rotatable member pairs configured as shown in Fig. 4 (although in a variation, pairs of rotatable members of different configurations may be employed). Like components of the rotatable member pair 223 with the rotatable member pair 23 of Figs. 1 and 2 share the same reference numerals, incremented by 200.

The rotatable member pair 223 basically comprises first and second rotatable members in the form of rollers 222 and 224 which are of the same type. These are both resiliently deformable rollers 222, 224 of similar construction to the roller 22 shown in Figs. 1 and 2. This provides the advantage that a separator incorporating the rollers 222 and 224 has the ability to draw down larger stones and the like, as the second roller 224 can support a significantly larger deformation than can the second roller 24 of the roller pair 23 shown in Figs. 1 and 2. Scraper blades 225 and 227 are provided for both of the rollers 222 and 224, and function as described above.

As both the upstream and downstream rollers 222 and 224 of Fig. 4 are equally resiliently deformable, and softer than the counter-rotating roller 24 of Fig. 1, the gripping effect in combination between rollers upon material being separated is increased. The arrangement shown in Fig. 4 has the potential to be less damaging to the crop 28 being harvested, as all rollers are of a soft construction and have smooth surfaces. Also, having resiliently deformable rollers 222 and 224 both upstream and downstream of the material 28 being separated increases the allowance for oversize clods and stones to pass down between the rollers without causing damage to the rollers.

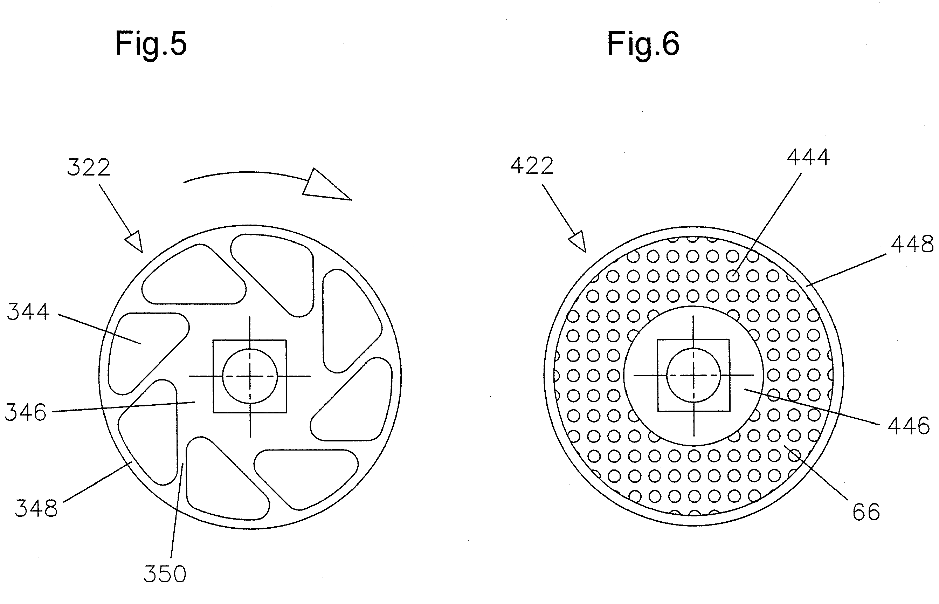

Turning now to Figs. 5 and 6, there are shown alternative rotatable members for a device for separating soil, clod and/or stones from root vegetables or bulbs, which may be utilised in the separators 20 or 120. The rotatable members are indicated generally by reference numerals 322 and 422, respectively. One of the rotatable members in the rotatable member pairs of the separators 20 and 120 shown in Figs. 1 to 3, or indeed of the rotatable members in the rotatable member pair 223 shown in Fig. 4, may be replaced with the rotatable members 322 or 422. Like components of the rotatable members 322 and 422 with the rotatable members 22 share the same reference numerals, incremented by 300 and 400, respectively.

Thus considering Fig. 5, there is shown a rotatable member in the form of a roller 322 which is of similar construction to the roller 22, but in which spoke sections 350 extending between an inner hub section 346 and an outer shell 348 are oriented parallel to tangents of the roller, or inclined relative to radii of the roller. Internal cavities 344 of the roller 322 are also differently shaped from the cavities 44 of the roller 22, being generally triangular in cross-section, rather than circular. Consequently, the roller 322 will deform in a different fashion under the load of, for example, a stone being drawn down, and may be more resiliently deformable than the roller 22. In particular, a stone will typically impart a generally radially directed load on the roller 322. Tangentially orienting the spoke sections 350 will promote a resilient collapsing of the roller 322 by deflection of the spoke sections.

Fig. 6 shows a rotatable member in the form of a roller 422 which has a larger number of internal cavities 444, an inner hub portion 446, an outer shell 448 and an inner core 66. The inner core 66 is annular and located between the inner hub portion 446 and the outer shell 448. The inner core 66 is of a foamed plastics material which includes the cavities 444. Typically, the inner core 66 will be of a material having greater resilience (and thus which is 'softer') than a material of the roller 22 of Fig. 1. Again, the roller 422 will perform differently to the roller 22 under the applied loading of a stone or the like, during draw down.

Turning now to Figs. 7A and 7B, there are shown side and front views of a rotatable member for a device for separating soil, clod and/or stones from root vegetables or bulbs in accordance with an embodiment of the present invention, and which may be utilised in the separators 20 or 120. The rotatable member is indicated generally by reference numeral 522. Either or both of the rotatable members in the rotatable member pairs of the separators 20 and 120 shown in Figs. 1 to 3, or indeed the rotatable members in the rotatable member pair 223 shown in Fig. 4, may be replaced with the rotatable member 522. Like components of the rotatable member 522 with the rotatable member 22 share the same reference numerals, incremented by 500.

The rotatable member 522 is again in the form of a roller, and is generally circular in cross-section, having a flat 68 formed on an outer surface 540 thereof. The roller 522 is generally circular in cross-section, and the flat 68 is formed by a chord of a circle defined by the roller. The provision of the flat 68 may advantageously improve the gripping and draw-down effect on soil, stones and/or clods, particularly in wet conditions. The flat 68 extends in a helical path around a circumference 541 of the roller 522, as the flat progresses along the axial length of the roller, as best shown in Fig. 7B. This may restrict exposure of the scraper blade 25 to the flat 68 to only a portion of its length at any given time. In other words, for any given rotational position of the roller 522, only a part (or parts) of a length of the scraper blade 25 will be located adjacent to the flat. This can be seen from Fig.7B, where a scraper blade 25, positioned as shown in Fig. 2, will only be exposed to the flat 68 at portions 70 and 72 along its length, with the roller 522 in the particular rotational orientation shown. This may be beneficial in terms of restricting a tendency for a hammering effect to be felt by the scraper blade 25, when it is adjacent to the flat 68. The roller of Fig.7A/B has an outer surface 540 (which is a main outer surface of the roller), at least part of said surface residing on or describing a circle in cross-section. The maximum outer circumference 541 described by the roller 522 is defined by said part of the surface. A majority of the main outer surface of the roller 522 resides on or describes the maximum outer circumference 541. No part of the roller 522 extends beyond the circumference 541.

Turning now to Figs. 8A and 8B, there are shown side and front views of another rotatable member for a device for separating soil, clod and/or stones from root vegetables or bulbs in accordance with another embodiment of the present invention, and which may be utilised in the separators 20 or 120. The rotatable member is indicated generally by reference numeral 622. Either or both of the rotatable members in the rotatable member pairs of the separators 20 and 120 shown in Figs. 1 to 3, or indeed the rotatable members in the rotatable member pair 223 shown in Fig. 4, may be replaced with the rotatable member 622. The rotatable member 622 is a variation on that shown in Figs. 7A/B and described above. Like components of the rotatable member 622 with the rotatable member 22 share the same reference numerals, incremented by 600; and with the rotatable member 522, the same reference numerals incremented by 100.

The roller 622 is of like construction and operation to the roller 522, save that it comprises a plurality of flats, and in the illustrated embodiment, comprises two flats 74 and 76 which are equidistantly spaced 180° apart around a circumference 641 of the roller. The provision of two (or more) such flats 74, 76 may enhance the gripping effect, particularly in very wet conditions.

A helix angle of the flat 68 on the roller 522, and/or of the flats 74 and 76 on the roller 622, may be varied. In particular, the helix angle may be decreased where a greater number of flats are provided on the roller. For example and as can be seen from a comparison of Figs. 7B and 8B, a helix angle 'E' of the flat 68 on the roller 522 is greater than a helix angle 'F' of the flats 74, 76 on the roller 622.

The rollers 522 and 622 may have an internal structure like any one of the rollers 22, 24, 322 or 422 shown in Figs. 1 to 6 and described above.

It will be understood that each rotatable member in the separators shown and described above will typically be of a similar construction, although it is within the range of possibilities of the present invention to provide a device having pairs of rotatable members of different rotatable members types, or indeed having different rotatable members in each pair, selected from those shown in Figs. 1 to 8B.

Various modifications may be made to the foregoing within the scope of the appended claims. Alternative cleaning elements such as wires or brushes may be employed. Different cleaning elements may be employed for each rotatable member in the pair. More than one cleaning element may be provided for each rotatable member in the pair, and the cleaning elements associated with each rotatable member may be of different types (for example, a scraper element and a brush may be provided).

## Claims

1. A device (20; 120) for separating soil, clod and/or stones from root vegetables or bulbs, the device comprising:
at least one pair of rotatable members (23; 123a-c) which are arranged so that soil, stones and/or clods are drawn down between the rotatable members whilst root vegetables or bulbs pass thereover, and in which:
• the rotatable members (22, 24; 122, 124; 522; 622) in said pair are arranged to rotate in opposite directions;
• at least one of the rotatable members in said pair is resiliently deformable;
• at least one of the rotatable members (522; 622) in said pair is generally circular in cross-section, and has at least one flat (68; 74, 76) formed on an outer surface (540; 640) thereof, the at least one flat extending in a helical path around a circumference of the rotatable member; and
• each rotatable member in said pair has a surface which is free from projections;
and in which the device comprises cleaning elements (25, 27; 125a-c, 127a-c), one for each rotatable member in said pair, for removing material adhered to a surface of the rotatable member.

2. A device (20; 120) as claimed in claim 1, in which each rotatable member (22, 24; 122, 124; 522; 622) in said pair (23; 123a-c) describes a maximum outer circumference, and is free from projections in that no part of the rotatable member extends beyond said circumference.

3. A device (20; 120) as claimed in claim 2, in which each rotatable member (22, 24; 122, 124; 522; 622) has a main outer surface, at least part of said surface describing a circle in cross-section, and in which the maximum outer circumference described by the rotatable member is defined by said part of the surface.

4. A device (20; 120) as claimed in claim 3, in which a majority of the main outer surface of each rotatable member (22, 24; 122, 124; 522; 622) describes the maximum outer circumference.

5. A device (20; 120) as claimed in any preceding claim, in which the surfaces of the rotatable members (22, 24; 122, 124; 522; 622) are substantially smooth.

6. A device (20; 120) as claimed in any preceding claim, in which each rotatable member (22, 24; 122, 124; 522; 622) in said pair (23; 123a-c) describes a uniform outer diameter and is generally cylindrical.

7. A device (20; 120) as claimed in any preceding claim, in which there are a plurality of flats (74, 76), spaced around a circumference of said rotatable member (522; 622).

8. A device (120) as claimed in any preceding claim, comprising:
a first, upstream pair (123a) of rotatable members (122, 124); and
at least one further pair (123b) of rotatable members (122, 124) which are located downstream of the first pair of rotatable members, and which are arranged to receive material passing along the device from the first pair;
in which the upstream rotatable member of the further pair is arranged relative to the upstream rotatable member of the first pair so there is a declination in a direction along the device from a location (60) at which material is charged on to the rotatable members.

9. A device (20; 120) as claimed in any preceding claim, in which the at least one resiliently deformable rotatable member (22, 24; 122, 124; 522; 622) is capable of resiliently supporting a deformation of at least about 15% relative to a radius of the rotatable member, to facilitate the passage of soil, clod and/or stones between the rotatable members.

10. A device (20; 120) as claimed in any preceding claim, in which the at least one resiliently deformable rotatable member (22, 24; 122, 124; 522; 622) is capable of resiliently supporting a deformation of up to about 60% relative to a radius of the rotatable member, to facilitate the passage of soil, clod and/or stones between the rotatable members.

11. A device (20; 120) as claimed in any preceding claim, in which, where the root vegetables or bulbs are potatoes, the rotatable members (22, 24; 122, 124; 522; 622) in said pair (23; 123a-c) are operable to separate weeds and/or haulm from the potatoes.

12. A harvester (21) including a device (20; 120) for separating soil, clod and/or stones from root vegetables or bulbs according to any of the preceding claims.

13. A static machine comprising a device (20; 120) for separating soil, clod and/or stones from root vegetables as claimed in any preceding claim.

## Patentansprüche

1. Vorrichtung (20; 120) zum Trennen von Ackerboden, Erdklumpen und/oder Steinen von Wurzelgemüse oder Knollen, wobei die Vorrichtung umfasst:
zumindest ein Paar rotierbarer Bauteile (23; 123a-c), die so angeordnet sind, dass Ackerboden, Steine und/oder Erdklumpen zwischen den rotierbaren Bauteilen hinabgeführt werden, während Wurzelgemüse oder Knollen darüber gleiten, und bei dem:
• die rotierbaren Bauteile (22, 24; 122, 124; 522; 622) in dem Paar so angeordnet sind, dass sie in entgegengesetzten Richtungen rotieren;
• zumindest eines der rotierbaren Bauteile in dem Paar nachgiebig verformbar ist;
• zumindest eines der rotierbaren Bauteile (522; 622) in dem Paar im Querschnitt im allgemeinen kreisförmig ist, und zumindest eine auf einer äußeren Oberfläche (540; 640) desselben gebildete Abflachung (68; 74, 76) aufweist, wobei die zumindest eine Abflachung sich in einem spiralförmigen Pfad um einen Umfang des rotierbaren Bauteiles erstreckt; und
• jedes rotierbare Bauteil in dem Paar eine Oberfläche aufweist, welche frei von Überständen ist;
und bei dem die Vorrichtung Reinigungselemente (24, 27; 125a-c, 127a-c) umfasst, eines für jedes rotierbare Bauteil in dem Paar, um an einer Oberfläche des rotierbaren Bauteils haftendes Material zu entfernen.

2. Vorrichtung (20; 120) nach Anspruch 1, bei der jedes rotierbare Bauteil (22, 24; 122, 124; 522; 622) in dem Paar (23; 123a-c) einen maximalen äußeren Umfang beschreibt, und insofern frei von Überständen ist, dass kein Teil des drehbaren Bauteils sich über diesen Umfang hinaus erstreckt.

3. Vorrichtung (20; 120) nach Anspruch 2, bei der jedes rotierbare Bauteil (22, 24; 122, 124; 522; 622) eine äußere Hauptoberfläche aufweist, wobei zumindest ein Teil der Oberfläche einen Kreis im Querschnitt beschreibt, und bei der der maximale äußere Umfang, welcher durch das drehbare Bauteil beschrieben wird, durch diesen Teil der Oberfläche definiert ist.

4. Vorrichtung (20; 120) nach Anspruch 3, bei der eine Mehrheit der äußeren Hauptoberflächen von jedem rotierbaren Bauteil (22, 24; 122, 124; 522; 622) den maximalen äußeren Umfang beschreibt.

5. Vorrichtung (20; 120) nach einem vorhergehenden Anspruch, bei der die Oberflächen der rotierbaren Bauteile (22, 24; 122, 124; 522; 622) im Wesentlichen glatt sind.

6. Vorrichtung (20; 120) nach einem vorgehenden Anspruch, bei der jedes rotierbare Bauteil (22, 24; 122, 124; 522; 622) in dem Paar (23; 123a-c) einen gleichförmigen äußeren Durchmesser beschreibt und im allgemeinen zylindrisch ist.

7. Vorrichtung (20; 120) nach einem vorhergehenden Anspruch, bei der es eine Vielzahl von Abflachungen (74, 76) gibt, welche um einen Umfang des drehbaren Bauteiles (522; 622) herum verteilt sind.

8. Vorrichtung (120) nach einem vorhergehenden Anspruch, umfassend:
ein erstes, stromaufwärts gelegenes Paar (123a) von rotierbaren Bauteilen (122, 124); und
zumindest ein weiteres Paar (123b) von rotierbaren Bauteilen (122, 124), welche stromabwärts von dem ersten Paar von rotierbaren Bauteilen angeordnet sind, und welche eingerichtet sind, um Material, welches entlang der Vorrichtung von dem ersten Paar durchgeführt wird, aufzunehmen;
bei der das stromaufwärts gelegene rotierbare Bauteil des weiteren Paares so relativ zu dem stromaufwärts gelegenen rotierbaren Bauteil angeordnet ist, dass eine Neigung vorliegt in einer Richtung entlang der Vorrichtung von einer Position (60) an der Material auf die rotierbaren Bauteile geladen wird.

9. Vorrichtung nach einem vorhergehenden Anspruch, bei der das zumindest eine nachgiebig verformbare rotierbare Bauteil (22, 24; 122, 124; 522; 622) in der Lage ist, nachgiebig eine Verformung von zumindest etwa 15 % relativ zu einem Radius des rotierbaren Bauteils zu ertragen, um die Durchführung von Ackerboden, Erdklumpen und/oder Steinen zwischen den rotierbaren Bauteilen zu erleichtern.

10. Vorrichtung (20; 120) nach einem vorhergehenden Anspruch, bei der das zumindest eine nachgiebig verformbare rotierbare Bauteil (22, 24; 122, 124; 522; 622) in der Lage ist, nachgiebig eine Verformung von bis zu 60 % relativ zu einem Radius des rotierbaren Bauteils zu ertragen, um die Durchführung von Ackerboden, Erdklumpen und/oder Steinen zwischen den rotierbaren Bauteilen zu erleichtern.

11. Vorrichtung (20; 120) nach einem vorhergehenden Anspruch, bei der, wenn das Wurzelgemüse oder die Knollen Kartoffeln sind, die rotierbaren Bauteile (22, 24; 122, 124; 522; 622) in dem Paar (22; 123a-c) betreibbar sind, um Gras und/oder Halme von den Kartoffeln zu trennen.

12. Erntemaschine (21), umfassend eine Vorrichtung (20; 120) zum Trennen von Ackerboden, Erdklumpen und/oder Steinen von Wurzelgemüse oder Knollen nach einem der vorhergehenden Ansprüche.

13. Ruhende Maschine, umfassend eine Vorrichtung (20; 120) zum Trennen von Ackerboden, Erdklumpen und/oder Steinen von Wurzelgemüse nach einem vorhergehenden Anspruch.

## Revendications

1. Dispositif (20 ; 120) de séparation de terre, de motte et/ou de pierres des légumes ou bulbes à racines, le dispositif comprenant :
au moins une paire d'éléments rotatifs (23 ; 123a-c) qui sont agencés de sorte que la terre, les pierres et/ou les mottes descende/descendent entre les éléments rotatifs tandis que les légumes ou bulbes à racines passent dessus et dans lequel :
• les éléments rotatifs (22, 24 ; 122, 124 ; 522 ; 622) dans ladite paire sont agencés pour tourner dans des directions opposées ;
• au moins l'un des éléments rotatifs dans ladite paire est déformable de manière élastique ;
• au moins l'un des éléments rotatifs (522 ; 622) dans ladite paire a une section transversale globalement circulaire, et a au moins un méplat (68 ; 74, 76) formé sur une surface extérieure (540 ; 640) de celui-ci, l'au moins un méplat s'étendant dans un trajet hélicoïdal autour d'une circonférence de l'élément rotatif ; et
• chaque élément rotatif dans ladite paire a une surface qui est exempte de saillies ;
et dans lequel le dispositif comprend des éléments de nettoyage (25, 27 ; 125a-c, 127a-c), l'un pour chaque élément rotatif dans ladite paire, pour enlever la matière adhérant à une surface de l'élément rotatif.

2. Dispositif (20 ; 120) tel que revendiqué dans la revendication 1, dans lequel chaque élément rotatif (22, 24 ; 122, 124 ; 522 ; 622) dans ladite paire (23 ; 123a-c) décrit une circonférence extérieure maximale, et est exempt de saillies dans la mesure où aucune partie de l'élément rotatif ne s'étend au-delà de ladite circonférence.

3. Dispositif (20 ; 120) tel que revendiqué dans la revendication 2, dans lequel chaque élément rotatif (22, 24 ; 122, 124 ; 522 ; 622) a une surface extérieure principale, au moins une partie de ladite surface décrivant un cercle en section transversale, et dans lequel la circonférence extérieure maximale décrite par l'élément rotatif est définie par ladite partie de la surface.

4. Dispositif (20 ; 120) tel que revendiqué dans la revendication 3, dans lequel la majorité de la surface extérieure principale de chaque élément rotatif (22, 24; 122, 124; 522; 622) décrit la circonférence extérieure maximale.

5. Dispositif (20 ; 120) tel que revendiqué dans l'une des revendications précédentes, dans lequel les surfaces des éléments rotatifs (22, 24 ; 122, 124 ; 522 ; 622) sont essentiellement lisses.

6. Dispositif (20 ; 120) tel que revendiqué dans l'une des revendications précédentes, dans lequel chaque élément rotatif (22, 24 ; 122, 124 ; 522 ; 622) dans ladite paire (23; 123a-c) décrit un diamètre extérieur uniforme et est globalement cylindrique.

7. Dispositif (20 ; 120) tel que revendiqué dans l'une des revendications précédentes, dans lequel il y a une pluralité de méplats (74, 76), espacés autour d'une circonférence dudit élément rotatif (522 ; 622).

8. Dispositif (120) tel que revendiqué dans l'une des revendications précédentes, comprenant :
une première paire amont (123a) d'éléments rotatifs (122, 124) ; et
au moins une paire supplémentaire (123b) d'éléments rotatifs (122, 124) qui sont situés en aval de la première paire d'éléments rotatifs, et qui sont agencés pour recevoir la matière passant le long du dispositif à partir de la première paire ;
dans lequel l'élément rotatif amont de la paire supplémentaire est agencé par rapport à l'élément rotatif amont de la première paire, de sorte qu'il y ait une inclinaison dans une direction le long du dispositif depuis un emplacement (60) au niveau duquel la matière est chargée sur les éléments rotatifs.

9. Dispositif (20 ; 120) tel que revendiqué dans l'une des revendications précédentes, dans lequel l'au moins un élément rotatif déformable de manière élastique (22, 24 ; 122, 124 ; 522 ; 622) est capable de supporter de manière élastique une déformation d'au moins environ 15% par rapport à un rayon de l'élément rotatif, pour faciliter le passage de la terre, de la motte et/ou des pierres entre les éléments rotatifs.

10. Dispositif (20 ; 120) tel que revendiqué dans l'une des revendications précédentes, dans lequel l'au moins un élément rotatif déformable de manière élastique (22, 24 ; 122, 124 ; 522 ; 622) est capable de supporter de manière élastique une déformation allant jusqu'à environ 60% par rapport à un rayon de l'élément rotatif, pour faciliter le passage de la terre, de la motte et/ou des pierres entre les éléments rotatifs.

11. Dispositif (20 ; 120) tel que revendiqué dans l'une des revendications précédentes, dans lequel, lorsque les légumes ou bulbes à racines sont des pommes de terre, les éléments rotatifs (22, 24 ; 122, 124 ; 522, 622) dans ladite paire (23 ; 123a-c) peuvent fonctionner pour séparer les mauvaises herbes et/ou les fanes des pommes de terre.

12. Moissonneuse (21) comportant un dispositif (20 ; 120) pour séparer la terre, la motte et/ou les pierres des légumes ou bulbes à racines selon l'une des revendications précédentes.

13. Machine statique comprenant un dispositif (20 ; 120) pour séparer la terre, la motte et/ou les pierres des légumes ou bulbes à racines selon l'une des revendications précédentes.
